# EUROPÄISCHE PATENTSCHRIFT

(11) **EP 0 534 208 B1**
(45) Veröffentlichungstag und Bekanntmachung des Hinweises auf die Patenterteilung: **19.06.1996**
(21) Anmeldenummer: 92115201.3
(22) Anmeldetag: 04.09.1992
(51) Int. Cl.: B29C 47/28, B29C 47/06

(54) **Spritzkopf für die Coextrusion von mindestens zwei Kunststoffmaterialien**
Extrusion head for co-extruding at least two plastic materials
Tête d'extrusion pour la co-extrusion d'au moins deux matériaux plastiques

(30) Priorität: 23.09.1991 DE 4131622
(43) Veröffentlichungstag der Anmeldung: 31.03.1993
(73) Patentinhaber: SIEMENS AKTIENGESELLSCHAFT, D-80333 München (DE)
(72) Erfinder: Niesemeyer, Norbert, Dr.-Ing., Hickory NC 28601 (US); Reissenweber, Wilfried, W-8633 Rödental (DE); Renner, Frank, W-8632 Neustadt (DE)

(56) Entgegenhaltungen:
- DE-A- 1 957 078
- DE-A- 3 933 028
- DE-B- 2 829 746
- FR-A- 1 259 938
- FR-A- 2 613 981
- GB-A- 1 064 622
- US-A- 4 081 232
- US-A- 4 280 801
- US-A- 4 773 954
- US-A- 5 046 938
- PATENT ABSTRACTS OF JAPAN vol. 8, no. 124 (M-301)(1561) 9. Juni 1984 & JP-A-59 29 141 (SUMITOMO DENKI KOGYO K.K.)

## Beschreibung

Die Erfindung betrifft einen Spritzkopf für die Coextrusion mindestens zweier unterschiedlicher Kunststoffmaterialien, für deren Zuführung jeweils getrennte, in eine gemeinsame Austrittsdüse mündende Zuführungskanäle vorgesehen sind, die in einen der Vergleichmäßigung des Materialstromes dienenden, spaltenförmigen Homogenisierungsbereich münden, wobei nach dem Zusammentreffen der beiden Materialien der gemeinsame Materialstrom über einen konusförmig ausgebildeten gemeinsamen Führungsspalt einer gemeinsamen Austrittsdüse zugeführt ist.

Ein Spritzkopf dieser Art ist aus der US-A-5 046 938 bekannt. Dabei verlaufen die Homogenisierungsbereiche für die einzelnen Mantelmaterialien etwa parallel zueinander. Der Nachteil einer derartigen Anordnung besteht darin, daß infolge der notwendigen Lange dieser Homogenisierungsbereiche die Gesamtbaulange des Spritzkopfes ebenfalls entsprechend groß wird. Ähnliche Ausführungen sind in der DE-A1 39 33 028 sowie aus den Patent Abstracts of Japan, vol.8, no. 124 (M-301)(1561), 9. Juni 1984 & JP-A-59 29 141 (Sumitomo Denki Kogyo K.K.) bekannt.

Aus der GB-A-1 064 622 ist es bekannt, elektrische Kabelseelen mit mehrschichtigen Umhüllungen zu umgeben. Dabei bestehen alle Umhüllungsmaterialien aus Polyethylen, so daß sich die Verarbeitung wegen der gleichen Materialeigenschaften relativ einfach gestaltet. Die verschiedenen Polyethylenschichten unterscheiden sich nur durch die jeweiligen Zusatzstoffe, wobei der zuerst aufgebrachten Polyethylenschicht leitende Materialien zugesetzt sind, so daß diese halbleitende Eigenschaften erhalt. Die zweite Polyethylenschicht ist so aufgebaut, daß sie chemisch vernetzt, während die dritte Polyethylenschicht einen Farbzusatz aufweist. Die verschiedenen Schichten werden räumlich und zeitlich nacheinander getrennt auf die Kabelseele aufgebracht. Für die Innenschicht und die Mittelschicht ist dabei in einem Teilbereich eine Führung etwa parallel zur Kabelachse vorgesehen, während das gefärbte Polyethylen für die Außenschicht über einen konusförmig verlaufenden Kanal zugeführt wird.

Aus der US-A-4 081 232 ist ein Extruderkopf bekannt, bei dem das Kunststoffmaterial zweier unterschiedlicher Schichten über zwei getrennte Ringspaltöffnungen nach außen geführt und erst außerhalb des Extruders durch Herunterrecken auf ein zentral durchlaufendes Mittenelement aufgebracht wird. Bei dieser Ausführungsform treffen somit die Materialströme erst außerhalb des Extruders zusammen.

Bei dem Extruder nach der FR-A-2 613 981 ergibt sich eine große Baulänge wegen der gegenläufig vom gleichen Kunststoffmaterial durchströmten Homogenisierungszonen, die beide parallel zur Durchlaufrichtung angeordnet sind.

Aus der DE-AS 28 29 746 ist ein Querspritzkopf bekannt, bei dem in einem Ausführungsbeispiel (Fig. 6) zwei Schichten aufgebracht werden. Hierzu weist der Querspritzkopf zwei in radialer Richtung verlaufende speziell ausgebaute Kreuznutenmischer auf. Diese sind in Form einer Ringscheibe aufgebaut, deren Stirnflächen geschlossene Flächen darstellen, während im Bereich der äußeren und inneren Mantelflächen die sich kreuzenden Nuten beginnen oder münden. Obwohl durch die radiale Anordnung der Verteil- und Mischvorrichtungen bei dem bekannten Querspritzkopf eine Einsparung an Baulänge ermöglicht ist, geht ein Teil der Längeneinsparung wieder dadurch verloren, daß alle Verteil- und Mischeinrichtungen radial angeordnet sind. Es muß nämlich der von der Düse am weitesten entfernte Zuführungskanal über eine größere Länge wieder parallel zur Durchlaufrichtung, d.h. in axialer Richtung fortgeführt werden, um zu der gemeinsamen Einmundung zu gelangen.

Eine Verkürzung der Baulänge von Spritzköpfen ist besonders dann problematisch, wenn Kunststoffschichten verwendet werden sollen, die stark unterschiedliche Eigenschaften aufweisen. Da diese unterschiedlichen Eigenschaften zur Erzielung von qualitativ hochwertigen Produkten vielfach erwünscht sind, erfordert die Realisierung im Spritzkopfbereich aufwendige Mehrdüsensysteme und es ist bei solchen Mehrschichtprodukten eine genaue Anpassung der einzelnen Aktivteile (Dorne, Düsen, Zwischenringe usw) notwendig. Bekannte Coextrusionsköpfe haben eine Baulänge, die mindestens dem 20-fachen des Produktdurchmessers entspricht, was teilweise zu hohen Druckverlusten in den Schmelzekanälen und damit zu erschwerten Extrusionsbedingungen führt. Mit den bekannten Einrichtungen treten außerdem Probleme bei weitgehend amorphen, niederviskosen Thermoplasten mit Verarbeitungstemperaturen über 260° C auf, da Passungen, Führungen und Dichtflächen starken Belastungen unterliegen.

Der Erfindung liegt die Aufgabe zugrunde, einen Spritzkopf zu schaffen, der einerseits die Verarbeitung auf sehr unterschiedlichen Materialien und andererseits bei hoher Produktqualität eine gedrängte Bauweise ergibt. Gemäß der Erfindung wird dies bei einem Spritzkopf der eingangs genannten Art dadurch erreicht, daß der Homogenisierungsbereich für das nach der Extrusion innen liegende Material sich im wesentlichen in axialer Richtung erstreckt und daß der Homogenisierungsbereich für das nach der Extrusion außen liegende Material sich im wesentlichen in radialer Richtung erstreckt.

Da der Homogenisierungsbereich für das nach der Extrusion innen liegende Material sich im wesentlichen in axialer Richtung erstreckt, wird hier ein Raum zur Verfügung gestellt, in dem der nachfolgende Homogenisierungsbereich für das zweite Kunststoffmaterial angeordnet werden kann. Im Vergleich zu einer nur radialen Anordnung aller Homogenisierungsbereiche ist also bei der Erfindung keine Zwischenübertragung nach dem Homogenisierungsbereich zur Zusammenführungsstelle für das Material der Innenschicht erforderlich. Der Homogenisierungsbereich für das im Endprodukt außen liegende Material verläuft radial, so daß die Zusammenführung der beiden Materialströme auf kürzestem Weg und bei gedrängtem Aufbau des Spritzkopfes erfolgen kann. Die Länge des Spritzkopfes beträgt vorteilhaft nun das 5- bis 8-fache des Durchmessers des extrudierten Produktes. Der erfindungsgemäße Spritzkopf zeichnet sich weiterhin dadurch aus, daß er es zuläßt, Materialien mit stark unterschiedlichen Schmelzrheologien bzw. mit nicht kompatiblen Polymerstrukturen zu verarbeiten (z.B. PA/PBT, PEI/PBT, PC/PBT, PC/PP, PE/PVC, LCP/PVC usw). Derartige in ihren Eigenschaften stark unterschiedliche Materialien konnten bisher nur mit Zwei-Düsensystemen bzw. in Tandemanordnungen oder getrennten Arbeitsgängen in dem geforderten Qualitätsrahmen gefertigt werden. Durch die Erfindung können somit stark unterschiedliche Materialien in einem Eindüsensystem verarbeitet werden.

Die für die Schmelzrheologie der unterschiedlichen Materialien spezifischen Verteilerkanäle sind bei der Erfindung entweder in dem Spritzkopfkörper von Anfang an fest eingearbeitet, d.h. der Spritzkopfkörper ist für eine spezielle Ausführungsform bzw. Materialkombination ausgelegt oder es wird gemäß einer Weiterbildung der Erfindung eine Verstellbarkeit der Spaltbreite im Homogenisierungsbereich vorgesehen, die eine Anpassung ein und desselben Spritzkopfes jeweils unterschiedliche zu verarbeitende Materialien zuläßt.

Die Baulänge des erfindungsgemäßen Spritzkopfes wird zweckmäßig kürzer gewählt, als der 10-fache Produkt-Außendurchmesser.

Sonstige Weiterbildungen der Erfindung sind in Unteransprüchen wiedergegeben.

Die Erfindung und ihre Weiterbildungen werden nachfolgend anhand von Zeichnungen näher erläutert.

Es zeigen:
- Fig. 1: im Querschnitt einen erfindungsgemäßen Coextrusions-Querspritzkopf für zwei unterschiedliche Materialien,
- Fig. 2: Einzelheiten der Anordnung nach Fig. 1 in vergrößerter Darstellung,
- Fig. 3: einen Querspritzkopf ähnlich Fig. 1 mit zusätzlich eingebauten wärmedämmenden Schichten,
- Fig. 4: einen Querspritzkopf analog Fig. 1 mit verstellbarer Spaltbreite im Homogenisierungsbereich und
- Fig. 5: den Aufbau eines Querspritzkopfes für die Erzeugung dreier unterschiedlicher Materialschichten.

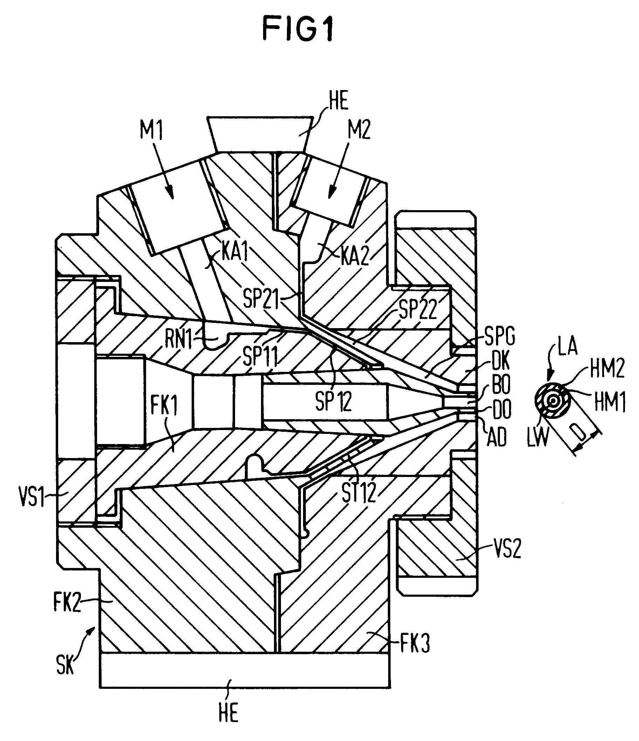

In Fig. 1 ist ein sich in Axrichtung erstreckender Führungskanal FK1 vorgesehen, der aus härtbarem Stahl besteht. In diesem Führungskanal FK1 ist ein Dorn DO eingesetzt, der eine Bohrung BO aufweist, wobei durch diese Bohrung ein durch den Führungskanal und den Dorn DO hindurchlaufendes strangförmiges Gut, z.B. ein elektrischer Leiter oder ein Lichtwellenleiter geführt wird. Im vorliegenden Beispiel ist der rechts von der Austrittsdüse AD erhaltene fertige Gegenstand als eine Lichtwellenleiterader LA im Querschnitt gezeichnet, die im Inneren einen lose eingebrachten Lichtwellenleiter LW enthält, der über die Bohrung BO im Dorn DO zugeführt wird.

Dieser Lichtwellenleiter LW soll mit mindestens zwei Kunststoffschichten HM1 und HM2 umhüllt werden, die stark unterschiedliche Eigenschaften aufweisen können. Beispielsweise soll der innere Mantel HM11 aus sehr harten und spröden, aber stark zugfestem Material bestehen (z.B. PA/PC/PEI), während der äußere Mantel HM2 aus elastischem, nicht zu irgendwelcher Rißbildung neigenden zähen Material (z.B. PEI/PP/PBT) bestehen soll. Demzufolge müssen zwei unterschiedliche Materialien M1 und M2 dem Coextrusionsquerspritzkopf SK zugeführt werden. Der Spritzkopf SK weist außen eine Heizung HE auf und ist mit zwei Eintrittskanälen für die Zuführung der Materialien M1 und M2 versehen, die mit KA1 und KA2 bezeichnet sind. Der Kanal KA1 ist in einem Führungskörper FK2 untergebracht und endet in einer Ringnut RN1, die der gleichmäßigen Verteilung des Materials M1 über den gesamten Führungskörper FK1 dient. Das Material M1 gelangt daraufhin in einen Homogenisierungsbereich SP11, der als leicht konisch verlaufender Ringspalt ausgebildet ist und sich somit im wesentlichen - bezogen auf die Durchlaufrichtung - in axialer Richtung erstreckt. An den Homogenisierungsbereich SP11 schließt sich für das Material M1 ein schräg nach innen verlaufender weiterer Spaltbereich SP12 an, der als Übergangsbereich von dem größeren Durchmesser zu einem kleineren Durchmesser dient. In diesem Übergangsbereich SP12 findet ebenfalls noch eine Homogenisierung und Vergleichmäßigung des Materialflusses von M1 statt.

Der Führungskörper FK2 hat einen Steg ST12, der etwa konusförmig ausgebildet ist und dessen Innenwand zusammen mit der Außenwand des Führungskörpers FK1 der Führung des Materials M1 dient.

Die Zuführung des zweiten Materials M2, welches der Bildung der äußeren Hülle HM2 dient, erfolgt über einen Zuführungskanal KA2, der in einem Führungskörper FK3 angeordnet ist. Dieser Führungskanal KA2 mündet in einen radialen Kanal mit anschließenden Spalt SP21, der in radialer Richtung verläuft und dessen eine Wand durch den Führungskörper FK3 und die zweite Wand durch den Führungskörper FK2 gebildet wird. Dieser radial verlaufende Kanal und der Spalt SP21 bildet den Homogenisierungsbereich für das Material M2 und verläuft etwa dort, wo der Homogenisierungsbereich SP11 für das erste Material M1 endet. Nach dem Homogenisierungsbereich SP21 folgt ein konusförmig gestalteter Übergangsbereich SP22, in dem die Spaltbreite etwas vergrößert wird. Die Wandung dieses Übergangsbereiches SP22 wird einerseits durch die Außenfläche des Steges ST12 des Führungskörpers FK2 gebildet und andererseits durch einen äußeren Düsenkörper DK der zweckmäßig aus härtbarem Stahl besteht. Der Übergangsbereich SP22 verbreitet sich nach außen etwas und am Ende des Steges ST12 laufen die beiden Materialströme von M1 und M2 zusammen und münden in einen kegelförmig verlaufenden gemeinsamen Übertragungskanal SPG, der in der Austrittsdüse AD endet.

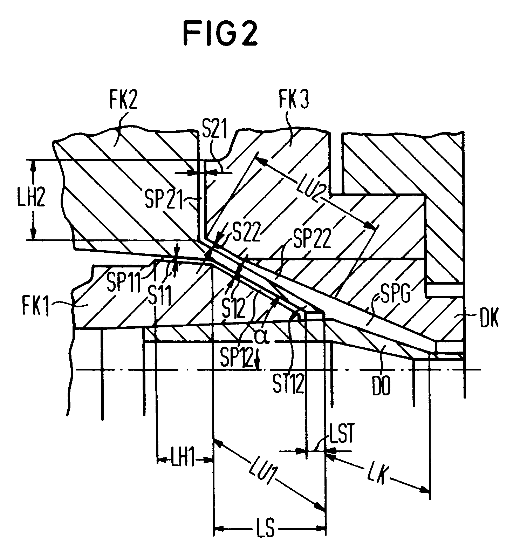

Die Zuführung des Materials M1 erfolgt nach dem Ubergangsbereich SP12 unmittelbar auf die Außenfläche des Dorns DO und läuft im Stirnbereich des Steges ST12 über eine gewisse Länge LST an diesem entlang. Durch diesen vorteilhaft 0,4 bis 2 mm breiten Spaltbereich von LST (vgl. Fig. 2) wird eine gleichmäßige erste Lage von Material M1 auf der Außenfläche des Dorns DO aufgebracht. Erst dann erfolgt die Zuführung des zweiten Materials M2.

Beim Zusammenführen der beiden Materialien M1 und M2 am Ende des Steges ST12 sollen diese nahezu gleiches Druckniveau und gleiche Fließgeschwindigkeit aufweisen. Eventuell noch vorhandene Unterschiede der Fließgeschwindigkeit und des Druckniveaus am Umfang werden, je nach Schichtdickenverhältnis im gemeinsamen Spalt SPG kompensiert. Unterstützt werden kann dies durch Veränderung des Spaltes SP22 mittels des Düsenkörpers DK (Verschiebung nach rechts oder links).

Durch die gleichbleibende Spaltbreite von SP12 wird die Fließgeschwindigkeit des Materials M1 nach innen hin vergrößert, während durch die Vergrößerung der Spaltbreite des Spaltes SP22 die Fließgeschwindigkeit entweder weniger vergrößert oder eventuell konstant gehalten wird. Die Homogenisierung der Kunststoffschmelzen M1 und M2 beginnt in den Verteilerkanälen KA1 und KA2, geht über in SP11 und SP21 und ist am rechten Ende des Steges ST12 beendet.

Mittels der auf den Führungskörper FK3 aufschraubbaren Verschraubung VS2 kann der Düsenkörper DK mehr oder weniger in beide Richtungen verschoben werden, so daß die Breite des Spaltes im Übertragungsbereich SP22 und im gemeinsamen Bereich SPG verändert und an die jeweiligen Materialien angepaßt werden kann. Der Führungskörper FK1 ist mittels einer Verschraubung VS1 gehalten, die in den Führungskörper FK2 eingeschraubt wird. Eine Verstellung der Spaltbreite SP12 ist möglich, hier aber nicht vorgesehen, da der fest definierte Spalt für eine mehreren Kunststoffschmelzen gerecht werdende Einstellung festgelegt wurde. Dieses Spaltmaß ermöglicht auch die Herstellung von Schichtdickenverhältnissen im Bereich zwischen 2:1 und 1:2.

Für die Erzeugung qualitativ hochwertiger Produkte mit gleichmäßigen und gut aneinander haftenden Mantelschichten ist die Auslegung im Homogenisierungsbereich und im Übergangsbereich von Bedeutung. Einzelheiten hierzu sind aus Fig. 2 zu entnehmen, wo in vergrößerter Darstellung der Spaltbereich des Spritzkopfes nach Fig. 1 dargestellt ist. Für die Verarbeitung stark unterschiedlicher Materialien und für die Erzielung einer gedrängten Baulänge sind folgende Wertebereiche zweckmäßig:
Länge LH1 des Homogenisierungsbereiches SP11 zwischen 5 und 16 mm
Länge LU1 des Übergangsbereichs SP12 zwischen 10 und 25 mm
Länge LH2 des Homogenisierungsbereiches SP21 zwischen 4 und 14 mm
Länge LU2 des Übergangsbereiches SP22 zwischen 12 und 28 mm
Verbreiterung des Übergangsbereichs SP22 in Durchlaufrichtung auf das 1 bis 3-fache
Erstreckung LST der Stirnseite des Steges ST12 zwischen 2 und 6 mm
Projektion LS für den Übergangsbereich von SP12 zwischen 15 und 30 mm
Das Zusammenführen der beiden Schmelzeschichten bzw. Materialien M1 und M2 ist definiert durch den Abstand LS und den Auftreffwinkel α , wobei LS jeweils dort beginnt, wo die Homogenisierungsbereiche SP11 und SP21 enden. Das gemeinsame Ende der Homogenisierungsbereiche SP11 und SP21 (d.h. der Zusammenfluß der Schmelzen) ist definiert dadurch, daß dort gleiche Druckverhältnisse und gleiche Fließgeschwindigkeiten in den einzelnen Ringkanälen in Strömungsrichtung herrschen. Der Bereich LS endet am Ende des Steges ST12. Die Länge von LS ist so gewählt, daß sie eine kurze Bauform ermöglicht und materialspezifisch festgelegt, so daß eine möglichst große Bandbreite an Kunststoffschmelzern optimal verarbeitet werden kann.

Der Auftreffwinkel α zwischen der Achse des Spritzkopfes und dem Übergangsbereich SP12 für das Material M1 wird zweckmäßig zwischen 20° und 35° gewählt. Dabei sind die kleineren Winkelwerte für in ihrer Schmelzerheologie stark unterschiedliche Schmelzen notwendig und die größeren Winkelwerte eher für rheologisch ähnliche Kunststoffe geeignet.

Für die Spaltbreiten gelten folgende vorteilhafte Wertbereiche:
S11 im Bereich von SP11 zwischen 0,3 und 2,0 mm
S12 im Bereich von SP12 zwischen 0,5 und 2,5 mm
S21 im Bereich von SP21 zwischen 0,3 und 2,0 mm
S22 im Bereich von SP22 zwischen 0,5 und 3,0 mm
Die nachgeschaltete, kurze gemeinsame Wegstrecke LK im Spaltbereich SPG längs der sich konisch verjüngenden Außenfläche des Dornes DO sollte eine Länge zwischen 5 und 30 mm aufweisen.

Diese gemeinsame Wegstrecke bei SPG ist im Hinblick auf die Gefahr von Grenzschichtinstabilitäten und schichtdickenverändernden Schmelzumlagerungen notwendig. Sie bietet aber die Möglichkeit, Kunststoffe mit einer großen Bandbreite im Bezug auf ihre viskosen Eigenschaften anzuwenden. Bezüglich der Viskosität gelten folgende Überlegungen:
Je höher die Gefahr von Grenzschichtinstabilitäten ist, desto kürzer ist SPG und damit LK auszuführen. D.h. ein hoher Viskositätsunterschied erfordert kleine Werte von LK.

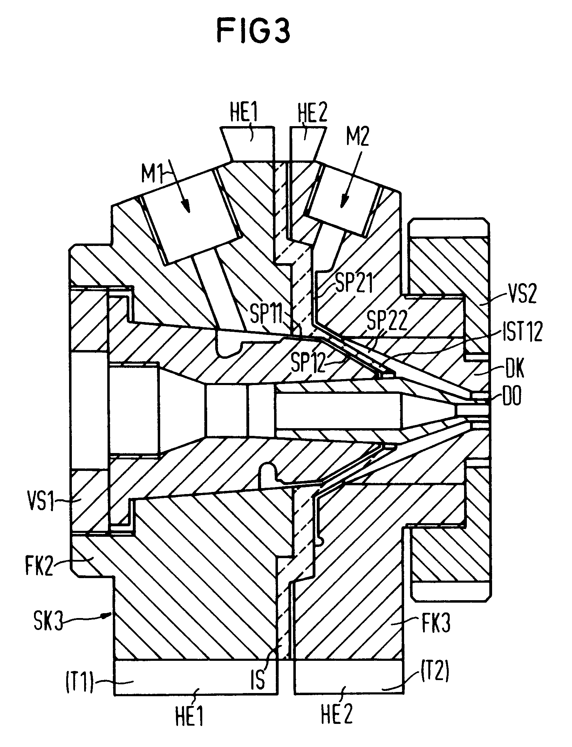

Die Verarbeitung stark unterschiedlicher Materialien M1 und M2 erfordert vielfach auch den Einsatz unterschiedlicher Verarbeitungstemperaturen. Wenn beispielsweise als Material M1 Polyetherimid oder Flourwerkstoffe (Verarbeitungstemperaturen T1 = 280° bis 450° C) mit Materialien M2 Polyestern PBT, PP, PE oder ähnlichen Werkstoffen (Verarbeitungstemperatur T2 = 220° bis 290° C) zu Mehrschichthüllenrohren ausgeformt werden sollen, dann lassen sich innerhalb gedrängter und kompakt aufgebauter Querspritzköpfe diese unterschiedlichen Temperaturen T1 und T2 in Dauerbetrieb normalerweise nicht ohne weiteres realisieren. Eine Möglichkeit für eine Abhilfe ist in Fig. 3 dargestellt, wo für den Querspritzkopf SK3 zwei getrennte Heizeinrichtungen HE1 und HE2 vorgesehen sind, die mit unterschiedlichen Temperaturen T1 und T2 arbeiten. Der Aufbau des Querspritzkopfes SK3 entspricht im wesentlichen dem von Fig. 1, weshalb für die gleichen Teile gleiche Bezugszeichen verwendet worden sind. Lediglich im Heizbereich, d.h. außen, sind unterschiedliche Anordnungen vorgesehen; es gibt nämlich eine erste Heizeinrichtung HE1 für den Bereich des Materials M1 und eine zweite Heizeinrichtung HE2 mit der Temperatur T2 für den Bereich des Materials M2. Um beide Bereiche auch innerhalb des Spritzkopfes ausreichend zu trennen, ist zweckmäßig eine Isolierschicht IS vorgesehen. Die Isolierschicht IS erstreckt sich im wesentlichen zwischen den Führungskörpern FK2 und FK3 in radialer Richtung und besteht zweckmäßig aus speziellem Keramikmaterial oder anderen hochtemperaturbeständigen Stoffen. Dadurch ist eine weitgehende wärmemäßige Entkopplung der beiden Bereiche voneinander gewährleistet. Es ist zweckmäßig, wenn auch der Stegbereich (in Fig. 1 mit ST12 bezeichnet) zwischen den beiden Übergangsbereichen SP12 und SP22 aus isolierendem Material entsprechender Festigkeit und Maßhaltigkeit bei hohen Temperaturen (z.B. Glaskeramik) besteht, was im vorliegenden Beispiel durch das Bezugszeichen IST12 angedeutet ist. Somit ist im wesentlichen im gesamten Homogenisierungsbereich SP11 und SP21 und auch im gesamten Übergangsbereich SP12 und SP22 das Isoliermaterial vorhanden und trennt die beiden Wege der Materialien M1 und M2 temperaturmäßig möglichst weitgehend voneinander, so daß die Verarbeitung ohne gegenseitige Temperaturbeeinflussung der Schmelzen erfolgen kann. Neben dem Dorn DO dient nur noch das Spritzkopfgehäuse als Schmelzeverteiler.

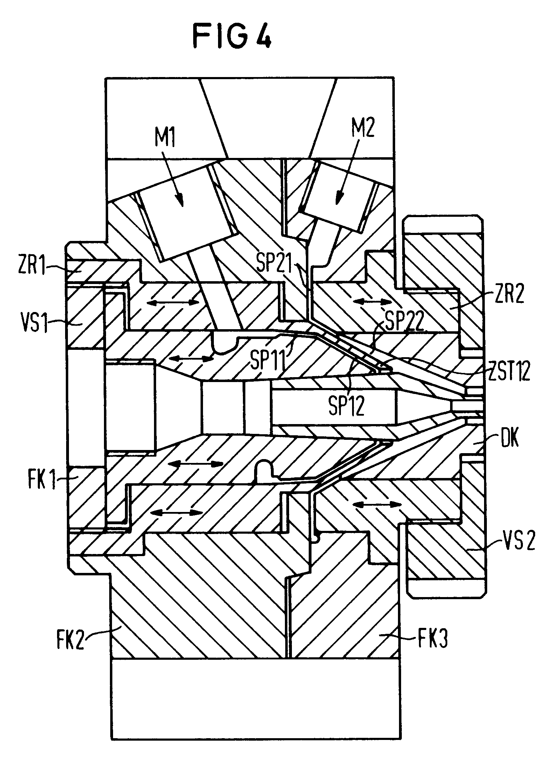

In Fig. 4 ist dargestellt, wie die Spaltbreiten für das Material M1 und M2 verändert werden können. Hierzu ist die Anordnung nach Fig. 1 insoweit abgewandelt als Zwischenringe oder Zwischenhülsen ZR1 und ZR2 vorgesehen sind. Der Zwischenring ZR1 liegt zwischen dem Führungskörper FK2 und dem Führungskörper FK1 und ist wie die Pfeile andeuten in axialer Richtung verschiebbar. Dadurch kann die Breite des Übergangsbereiches SP12 für das Material M1 verändert werden. An dem Zwischenring ZR1 ist außerdem der dem Steg ST12 entsprechende Steg ZST12 angeformt. Der Zwischenring ZR2 liegt zwischen dem Führungskörper FK3 und dem Düsenkörper DK und ermöglicht eine Beeinflussung der Spaltbreite des Spaltes SP21 im Homogenisierungsbereich und in Folge der abgeschrägten Teilfläche auch eine teilweise Beeinflussung des Übergangsbereiches SP22 für das Material M2. Mechanisch wird die Verschiebbarkeit der Zwischenringe ZR1 und ZR2 so gelöst, daß die Hülsen ZR1 bzw. ZR2 mit den Führungskörpern FK2 bzw. FK3 verschraubt sind, so daß z.B. mittels Distanzringen die Spaltweiten in einfacher Weise variiert werden können.

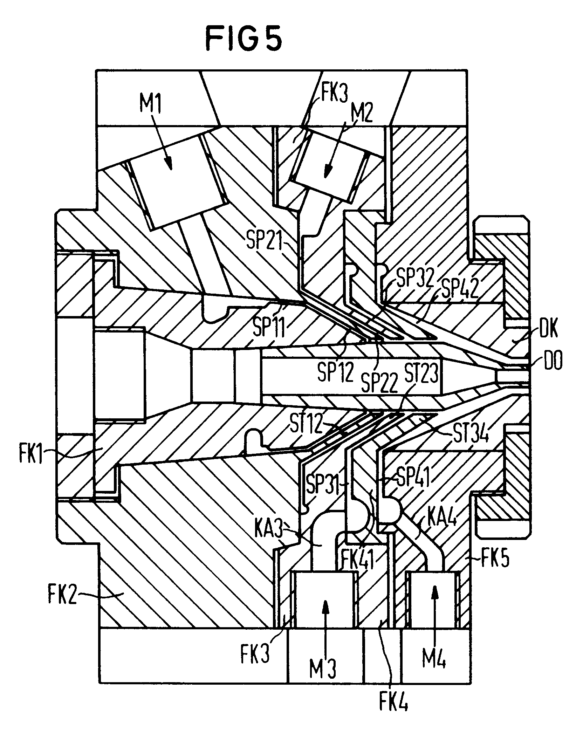

In Fig. 5 ist ein Vierfach-Extrusionsspritzkopf dargestellt, wobei der Aufbau im linken und im zentralen Teil ungefähr der Anordnung nach Fig. 1 entspricht, weshalb die dortigen Bezugszeichen für einander entsprechende Teile wieder verwendet wurden. Die innerste Schicht und die darauffolgende nächste Schicht werden durch die Materialien M1 und M2 gebildet. Darüber hinaus sind zwei weitere Schichten mit den Materialien M3 und M4 aufzubringen. Hierfür sind Zuführungskanäle KA3 und KA4 in entsprechenden Führungskörpern FK4 und FK5 vorgesehen, wobei an den Führungskörper FK4 ein Ansatz FK41 angesetzt ist und für die Zuführung des Materials M4 ein Führungskörper FK5 dient, welcher den Zuführungskanal KA4 enthält. Die Führungskörper FK3 und FK4 bilden in ihrem inneren Endbereich Stege ST23 und ST34, so daß insgesamt vier Übergangskanäle SP12, SP22, SP32 und SP42 gebildet werden. Die Auslegung der Übergangsbereiche SP32 und SP42 erfolgt analog der Dimensionierung des Übergangsbereichs SP22 wie er im einzelnen im Zusammenhang mit Fig. 1 und Fig. 2 ausführlich erläutert ist. Vor jedem dieser zusätzlichen Übergangsbereiche SP32 und SP42 liegt jeweils ein Homogenisierungsbereich SP31 und SP41, der sich jeweils in radialer Richtung erstreckt (analog zum Homogenisierungskanal SP21 des Materials M2), wobei auch hier für die Dimensionierung die gleichen Überlegungen gelten. Insgesamt ist also auch bei Spritzköpfen mit mehr als zwei zu verarbeitenden Materialien die Anordnung so getroffen, daß nur der Homogenisierungsbereich für das innen liegende Material M1 in etwa axialer Richtung verläuft, während für alle übrigen, nämlich für die Materialien M2, M3 und M4 die zugehörigen Homogenisierungsbereiche SP21, SP31 und SP41 im wesentlichen in radialer Richtung verlaufend angeordnet sind.

## Patentansprüche

1. Spritzkopf (SK) für die Coextrusion mindestens zweier unterschiedlicher Kunststoffmaterialien (M1, M2), für deren Zuführung getrennte, in eine gemeinsame Austrittsdüse (AD) mündende Zuführungskanäle (KA1, KA2) vorgesehen sind, die in einen der Vergleichmäßigung des Materialstromes dienenden, spaltenförmigen Homogenisierungsbereich (SP11, SP21) münden, wobei nach dem Zusammentreffen der beiden Materialien (M1, M2) der gemeinsame Materialstrom über einen konusförmig ausgebildeten gemeinsamen Führungsspalt (SPG) einer gemeinsamen Austrittsdüse (AD) zugeführt ist,
**dadurch gekennzeichnet,**
daß der Homogenisierungsbereich (SP11) für das nach der Extrusion innen liegende Material (HM1) sich im wesentlichen in axialer Richtung erstreckt,
und daß der Homogenisierungsbereich (SP21) für das nach der Extrusion außen liegende Material (HM2) sich im wesentlichen in radialer Richtung erstreckt.

2. Spritzkopf (SK) nach Anspruch 1,
**dadurch gekennzeichnet,**
daß nach den Homogenisierungsbereichen (SP11, SP21) jeweils ein schräg nach innen gerichteter Übergangsbereich (SP12, SP22) vorgesehen ist, an dessen Ende die Materialien (M1, M2) zusammentreffen.

3. Spritzkopf (SK) nach Anspruch 2,
**dadurch gekennzeichnet,**
daß die Übergangsbereiche (SP12, SP22) im wesentlichen etwa parallel zueinander verlaufen.

4. Spritzkopf (SK) nach Anspruch 2 oder 3,
**dadurch gekennzeichnet,**
daß der Übergangsbereich (SP12) für das innere Material (SM1) im wesentlichen mit konstanter Spaltbreite ausgebildet ist.

5. Spritzkopf (SK) nach einem der Ansprüche 3 oder 4,
**dadurch gekennzeichnet,**
daß der Übergangsbereich für das außen liegende Material (SM2) in Durchlaufrichtung sich verbreiternd ausgebildet ist.

6. Spritzkopf (SK) nach einem der vorhergehenden Ansprüche,
**dadurch gekennzeichnet,**
daß im Zentrum ein Dorn (DO) vorgesehen ist, dessen Außenwand der Führung der beiden Materialschichten (SM1, SM2) dient und der die innere Begrenzung der Austrittsdüse (AD) bildet.

7. Spritzkopf (SK) nach Anspruch 6,
**dadurch gekennzeichnet,**
daß neben dem Dorn (DO) nur das Spritzkopfgehäuse als Schmelzeverteiler dient.

8. Spritzkopf (SK) nach einem der vorhergehenden Ansprüche,
**dadurch gekennzeichnet,**
daß eine die äußere Begrenzung des gemeinsamen Materialstromes bildender Düsenkörper (DK) vorgesehen ist.

9. Spritzkopf (SK) nach einem der Ansprüche 6 bis 8,
**dadurch gekennzeichnet,**
daß der Dorn (DO) eine Durchtrittsöffnung (BO) für ein langgestrecktes, von den beiden Materialien (SM1, SM2) einzuhüllendes Gut (LW) aufweist.

10. Spritzkopf (SK) nach einem der vorhergehenden Ansprüche,
**dadurch gekennzeichnet,**
daß die Breite des Homogenisierungsbereiches (SP21) für das äußere Material (SM2) einstellbar ist.

11. Spritzkopf (SK) nach einem der Ansprüche 2 bis 10,
**dadurch gekennzeichnet,**
daß die Spaltbreite des Übergangsbereiches (SP22) für das äußere Material (SM1) einstellbar ist.

12. Spritzkopf (SK) nach einem der Ansprüche 2 bis 11,
**dadurch gekennzeichnet,**
daß die Spaltbreite (SP12) für den Übergangsbereich (SP12) des inneren Materials (SM1) veränderbar ausgebildet ist.

13. Spritzkopf (SK) nach einem der vorhergehenden Ansprüche,
**dadurch gekennzeichnet,**
daß für die beiden den unterschiedlichen Materialien (M1, M2) zugeordneten Bereiche des Spritzkopfes (SK) getrennte Heizeinrichtungen (HE1, HE2) zugeordnet sind, die unterschiedliche Verarbeitungstemperaturen (T1, T2) für die beiden Materialien bereitstellen.

14. Spritzkopf (SK) nach einem der vorhergehenden Ansprüche,
**dadurch gekennzeichnet,**
daß zwischen dem Verarbeitungsbereich für das erste Material (M1) und dem Verarbeitungsmaterial für das zweite Material (M2) eine thermische Isolierung (IS) vorgesehen ist.

15. Spritzkopf (SK) nach Anspruch 13,
**dadurch gekennzeichnet,**
daß die Isolierung bis zum Zusammenfließen der beiden Materialströme am Ende des Übergangsbereiches (SP12, SP22) reicht.

16. Spritzkopf (SK) nach einem der vorhergehenden Ansprüche,
**dadurch gekennzeichnet,**
daß bei mehr als zwei Kunststoffmaterialien die Homogenisierungsbereiche für alle auf das am meisten innen liegende Material (M1) folgenden Homogenisierungsbereiche (SP21, SP31, SP41) in radialer Richtung verlaufend ausgebildet sind.

17. Spritzkopf (SK) nach einem der vorhergehenden Ansprüche,
**dadurch gekennzeichnet,**
daß seine Baulänge kürzer als das 10-fache des maximalen Produktdurchmessers ausgeführt ist.

18. Spritzkopf (SK) nach einem der Ansprüche 2 bis 18,
**dadurch gekennzeichnet,**
daß der Auftreffwinkel (α) zwischen der Achse des Spritzkopfes (SK) und dem Übergangsbereich für das innenliegende Material (M1) zwischen 20° und 35° gewählt ist.

## Claims

1. Extrusion head (SK) for the coextrusion of at least two different plastics materials (M1, M2), for the feeding of which there are provided separate feeding channels (KA1, KA2), which enter into a homogenization region (SP11, SP21), which is in the form of a gap and serves for homogenizing the material stream, and open out into a common die (AD), the joint material stream after the meeting of the two materials (M1, M2) being fed via a conically designed common guiding gap (SPG) to a common die (AD), characterized in that the homogenization region (SP11) for the interior material (HM1) after extrusion extends substantially in an axial direction, and in that the homogenization region (SP21) for the exterior material (HM2) after extrusion extends substantially in a radial direction.

2. Extrusion head (SK) according to Claim 1, characterized in that downstream of the homogenization regions (SP11, SP21) there is respectively provided an obliquely inwardly directed transitional region (SP12, SP22), at the end of which the materials (M1, M2) meet.

3. Extrusion head (SK) according to Claim 2, characterized in that the transitional regions (SP12, SP22) substantially run approximately parallel to each other.

4. Extrusion head (SK) according to Claim 2 or 3, characterized in that the transitional region (SP12) for the interior material (SM1) is formed substantially with a constant gap width.

5. Extrusion head (SK) according to one of Claims 3 or 4, characterized in that the transitional region for the exterior material (SM2) is formed such that it widens in the direction of throughflow.

6. Extrusion head (SK) according to one of the preceding claims, characterized in that in the centre there is provided a mandrel (DO), whose outer wall serves for guiding the two material layers (SM1, SM2) and which forms the inner limitation of the die (AD).

7. Extrusion head (SK) according to Claim 6, characterized in that, apart from the mandrel (DO), only the extrusion head housing serves as a manifold for the melt.

8. Extrusion head (SK) according to one of the preceding claims, characterized in that there is provided a die body (DK), forming the outer limitation of the joint material stream.

9. Extrusion head (SK) according to one of Claims 6 to 8, characterized in that the mandrel (DO) has a passage opening (BO) for an elongate article (LW) to be sheathed by the two materials (SM1, SM2).

10. Extrusion head (SK) according to one of the preceding claims, characterized in that the width of the homogenization region (SP21) for the exterior material (SM2) can be set.

11. Extrusion head (SK) according to one of Claims 2 to 10, characterized in that the gap width of the transitional region (SP22) for the exterior material (SM1) can be set.

12. Extrusion head (SK) according to one of Claims 2 to 11, characterized in that the gap width (SP12) for the transitional region (SP12) of the interior material (SM1) is formed such that it can be varied.

13. Extrusion head (SK) according to one of the preceding claims, characterized in that for the two regions of the extrusion head (SK) assigned to the different materials (M1, M2) there are assigned separate heating devices (HE1, HE2), which provide different processing temperatures (T1, T2) for the two materials.

14. Extrusion head (SK) according to one of the preceding claims, characterized in that a thermal insulation (IS) is provided between the processing region for the first material (M1) and the processing region for the second material (M2).

15. Extrusion head (SK) according to Claim 13, characterized in that the insulation reaches up to the flowing together of the two material streams at the end of the transitional region (SP12, SP22).

16. Extrusion head (SK) according to one of the preceding claims, characterized in that, if there are more than two plastics materials, the homogenization regions for all the homogenization regions (SP21, SP31, SP41) following the most interior material (M1) are formed such that they run in a radial direction.

17. Extrusion head (SK) according to one of the preceding claims, characterized in that its overall length is made shorter than 10 times the maximum product diameter.

18. Extrusion head (SK) according to one of Claims 2 to 18, characterized in that the angle of incidence (α) between the axis of the extrusion head (SK) and the transitional region for the interior material (M1) is chosen between 20° and 35°.

## Revendications

1. Tête d'extrusion (SK) pour la coextrusion d'au moins deux matières (M1,M2) plastiques différentes pour l'amenée desquelles sont prévus des canaux (KA1,KA2) d'amenée distincts, débouchant dans une buse (AD) de sortie commune, canaux qui débouchent dans une région (SP11,SP12) d'homogénéisation en forme de fente qui sert à l'homogénéisation du courant de matière, le courant de matière commun étant, après la rencontre des deux matières (M1,M2), envoyé par l'intermédiaire d'une fente (SPG) de guidage commune en forme de cône dans une buse (AD) de sortie commune,
caractérisée en ce que
la région (SP11) d'homogénéisation de la matière (HM1) se trouvant à l'intérieur après l'extrusion S'étend sensiblement suivant le direction axiale, et en ce que
la région (SP21) d'homogénéisation de la matière (HM2) se trouvant à l'extérieur après l'extrusion s'étend sensiblement suivant la direction radiale.

2. Tête d'extrusion (SK) suivant la revendication 1,
caractérisée en ce qu'il est prévu, à la suite de chaque région (SP11,SP12) d'homogénéisation, une région (SP12,SP22) de transition dirigée obliquement vers l'intérieur et à l'extrémité de laquelle les matières (M1,M2) se rencontrent.

3. Tête d'extrusion (SK) suivant la revendication 2,
caractérisée en ce que les régions (SP12,SP13) de transition s'étendent à peu près sensiblement parallèlement l'une à l'autre.

4. Tête d'extrusion (SK) suivant la revendication 2 ou 3,
caractérisée en ce que la région (SP12) de transition pour la matière (HM1) intérieure a une largeur de fente sensiblement constante.

5. Tête d'extrusion (SK) suivant la revendication 3 ou 4,
caractérisée en ce que la région de transition pour la matière (HM2) qui se trouve à l'extérieur, s'élargit suivant la direction de passage.

6. Tête d'extrusion (SK) suivant l'une des revendications précédentes,
caractérisée en ce qu'il est prévu au centre un mandrin (DO), dont la paroi extérieure sert au guidage des deux couches (HM1,HM2) de matière et qui forme la limite intérieure de la buse (AD) de sortie.

7. Tête d'extrusion (SK) suivant la revendication 6,
caractérisée en ce que, outre le mandrin (DO), seul le boîtier de tête d'extrusion sert de répartiteur de matière fondue.

8. Tête d'extrusion (SK) suivant l'une des revendications précédentes,
caractérisée en ce qu'il est prévu un corps (DK) de buse formant la limite extérieure du courant de matière commun.

9. Tête d'extrusion (SK) suivant l'une des revendications 6 à 8,
caractérisée en ce que le mandrin (DO) comporte une ouverture (BO) de passage pour un produit (LW) s'étendant en longueur à gainer des deux matières (HM1,HM2).

10. Tête d'extrusion (SK) suivant l'une des revendications précédentes,
caractérisée en ce que la largeur de la région (SP21) d'homogénéisation de la matière (HM2) extérieure est réglable.

11. Tête d'extrusion (SK) suivant l'une des revendications 2 à 10,
caractérisée en ce que la largeur de fente de la région (SP22) de transition de la matière (HM2) extérieure est réglable.

12. Tête d'extrusion (SK) suivant l'une des revendications 2 à 11,
caractérisée en ce que la largeur de fente (SP12) de la région (SP12) de transition de la matière (HM1) intérieure peut être modifiée.

13. Tête d'extrusion (SK) suivant l'une des revendications précédentes,
caractérisée en ce que des dispositifs (HE1, HE2) de chauffage distincts sont affectés aux régions de la tête (SK) d'extrusion affectées aux deux matières (M1, M2) différentes, ces dispositifs mettant les deux matières à des températures (T1, T2) de transformation différentes.

14. Tête d'extrusion (SK) suivant l'une des revendications précédentes,
caractérisée en ce qu'il est prévu un isolant (IS) thermique entre la région de transformation de la première matière (M1) et la région de transformation de la seconde matière (M2).

15. Tête d'extrusion (SK) suivant la revendication 13,
caractérisée en ce que l'isolant s'étend jusqu'à la réunion des deux çourants de matière à l'extrémité des régions (SP12, SP22) de transition.

16. Tête d'extrusion (SK) suivant l'une des revendications précédentes,
caractérisée en ce que, dans le cas de plus de deux matières plastiques, les régions d'homogénéisation sont formées de manière que toutes les régions (SP21, SP31, SP41) d'homogénéisation venant à la suite de la matière (M1) la plus à l'intérieur s'étendent suivant la direction radiale.

17. Tête d'extrusion (SK) suivant l'une des revendications précédentes,
caractérisée en ce que sa dimension en longueur est plus petite que dix fois le diamètre maximum de produit.

18. Tête d'extrusion (SK) suivant l'une des revendications 2 à 18,
caractérisée en ce que l'angle (α) d'incidence entre l'axe de la tête d'injection (SK) et la région de transition pour la matière (M1) située à l'intérieur est compris entre 20° et 35°.
